# FASCICULE DE BREVET EUROPEEN

(11) **EP 1 027 357 B1**
(45) Date de publication et mention de la délivrance du brevet: **03.04.2002**
(21) Numéro de dépôt: 97921914.4
(22) Date de dépôt: 30.04.1997
(51) Int. Cl.: C07F 7/10, C07F 5/00, C07F 5/06, C08F 10/00

(54) **NOUVEAUX COMPOSES POSSEDANT UN ELEMENT DU GROUPE 13 LIE A UN LIGAND TRIDENTATE MONO- OU DI-ANIONIQUE, LEUR PROCEDE DE PREPARATION ET LEUR APPLICATION COMME CATALYSEURS DE POLYMERISATION**
NEUE VERBINDUNGEN, DIE EIN ELEMENT DER GRUPPE 13 ENTHALTEN, DAS MIT EINEM MONO- ODER DIANIONISCHEN DREIZÄHNIGEN LIGANDEN GEBUNDEN IST, EIN VERFAHREN ZU IHRER HERSTELLUNG UND IHRE ANWENDUNG ALS POLYMERISATIONSKATALYSATOREN
NEW COMPOUNDS HAVING ONE GROUP 13 ELEMENT, BOUND WITH ONE MONO- OR DI-ANIONIC TRIDENT LIGAND, A METHOD OF PREPARATION AND APPLICATION THEREOF AS POLYMERISATION CATALYSTS

(30) Priorité: 02.05.1996 EP 96400938
(43) Date de publication de la demande: 16.08.2000
(73) Titulaire: SOCIETE DE CONSEILS DE RECHERCHES ET D'APPLICATIONS SCIENTIFIQUES (S.C.R.A.S.), 75016 Paris (FR); CENTRE NATIONAL DE LA RECHERCHE SCIENTIFIQUE, 75016 Paris Cédex (FR)
(72) Inventeur: BERTRAND, Guy, F-31320 Pechbusque (FR); CAZAUX, Jean-Bernard, F-30390 Aramon (FR); EMIG, Norbert, F-31000 Toulouse (FR); REAU, Régis, F-31400 Toulouse (FR)
(74) Mandataire: Bourgouin, André
(86) Numéro de dépôt international: FR9700773
(87) Numéro de publication internationale: WO9742197

(56) Documents cités:
- CHEMICAL ABSTRACTS, vol. 59, no. 3, 5 Août 1963 Columbus, Ohio, US; abstract no. 2631 c, MEHROTRA, R.C. ET AL.: "DERIVATIVES OF ALUMINUM WITH MONO-, DI-, AND TRIETANOL-AMINES" XP002012086 & J. INDIAN CHEM. SOC., vol. 39, 1962, pages 677-682,

## Description

Certains ligands tridentates mono- et di-anioniques sont connus comme ligands pour les métaux de transition. Ainsi, le dérivé (Ph₂PCH₂SiMe₂)₂N⁻ a été utilisé pour préparer des complexes de l'iridium (Fryzuk et coll., Angew. Chem. Ed. Engl. (1990), 29, 73) et le dérivé [(Me₃SiNCH₂CH₂)₂NSiMe₃]²⁻ a été utilisé pour préparer des complexes dichlorure de zirconium (Cloke et coll., J. Chem. Soc., Dalton Trans. (1995), 25). Des dérivés du bore possédant le ligand [(O₂CCH₂)₂NCH₃]²⁻ sont également connus (Contrepas et coll., J. Organomet. Chem. (1986), 307,1). D'autre part, des dérivés de l'aluminium possédant le ligand [NH(CH₂CH₂O)₂]²⁻ ont également été décrits (Mehrotra et coll., J. Indian Chem. Soc. (1962), 39, 677-82).

On connaît par ailleurs l'utilisation des acides de Lewis possédant un élément du groupe 13 en synthèse organique (Yamamoto, H. dans Organometallies in Synthesis; Schlosser, M., Ed. ; John Wiley and Sons Ltd. : West Sussex, England, 1994, Chapitre 7) ainsi que comme catalyseurs pour la polymérisation d'hétérocycles (Inoue, Acc. Chem. Res. (1996) 29,39). Inoue et coll. ont montré que les catalyseurs possédant des ligands de type porphyrine étaient capables de produire des polymères ayant un indice de polymolécularité proche de un (J. Chem. Soc., Chem. Commun. (1985), 1148 ; Chem. Lett. (1987), 991; Makromol. Chem. (1981) 182, 1073). De plus, ces catalyseurs peuvent être utilisés pour préparer des copolymères alternés ou séquencés (Inoue et coll., J. Am. Chem. Soc. (1983) 105, 1304 ; J.Am. Chem. Soc. (1985) 107, 1358 ; Macromolecules (1984) 17, 2217). Ces deux propriétés sont dues au fait qu'un polymère vivant est généré.

Cependant, ces systèmes catalytiques utilisent des ligands porphyrines onéreux et difficiles d'accès, d'où un coût accru. D'autre part, afin d'augmenter l'activité, des ajouts d'acides de Lewis sont nécessaires, ce qui augmente la complexité des systèmes catalytiques (Inoue et coll., Macromolecules (1994) 27, 2013 ; Macromolecules (1995) 28, 651).

Le problème était donc de trouver des systèmes catalytiques à la fois efficaces, plus facilement synthétisables et plus économiques que ceux antérieurement préconisés.

La présente invention concerne de nouveaux composés possédant un élément du groupe 13 lié à un ligand tridentate mono- ou di-anionique, un procédé pour leur préparation et leur utilisation notamment en tant que catalyseur de polymérisation.

L'invention a ainsi pour objet les produits de formule générale 1 et 2 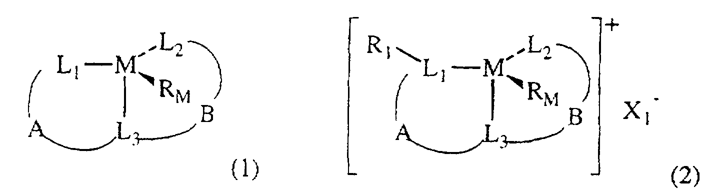 dans laquelle
- M: représente un élément du groupe 13 ;
- R_{M}: représente l'atome d'hydrogène, un atome d'halogène ou l'un des radicaux substitués (par un ou plusieurs substituants identiques ou différents) ou non-substitués suivants : alkyle, cycloalkyle, aryle, alkoxy, cycloalkoxy, aryloxy, alkylthio, cycloalkylthio ou arylthio, dans lesquels ledit substituant est un atome d'halogène, le radical alkyle, nitro ou cyano ;
- A et B: représentent, indépendamment, une chaîne carbonée de 2 à 4 atomes de carbone, optionellement substituée par l'un des radicaux substitués (par un ou plusieurs substituants identiques ou différents) ou non substitués suivants : alkyle, cycloalkyle ou aryle, dans lesquels ledit substituant est un atome d'halogène, le radical alkyle, nitro ou cyano ;
- L₁, L₂ et L₃: représentent, indépendamment, un groupe de formule -E₁₅(R₁₅)- dans laquelle
E₁₅ est un élément du groupe 15 et
R₁₅ représente l'atome d'hydrogène ; l'un des radicaux substitués (par un ou plusieurs substituants identiques ou différents) ou non-substitués suivants : alkyle, cycloalkyle ou aryle, dans lesquels ledit substituant est un atome d'halogène, le radical alkyle, nitro ou cyano ; un radical de formule RR'R"E₁₄- dans laquelle E₁₄ est un élément du groupe 14 et R, R' et R" représentent, indépendamment, l'atome d'hydrogène ou l'un des radicaux substitués (par un ou plusieurs substituants identiques ou différents) ou non-substitués suivants : alkyle, cycloalkyle, aryle, alkoxy, cycloalkoxy, aryloxy, alkylthio, cycloalkylthio ou arylthio, dans lesquels ledit substituant est un atome d'halogène, le radical alkyle, nitro ou cyano ; ou un radical de formule SO₂R'₁₅ dans laquelle R'₁₅ représente un atome d'halogène, un radical alkyle, haloalkyle ou aryle éventuellement substitué par un ou plusieurs substituants choisis parmi les radicaux alkyle, haloalkyle et halogène ;
- X₁⁻: représente un anion non coordinant vis à vis de l'élément M ;
- R₁: représente un atome d'hydrogène, un radical de formule RR'R"E₁₄- dans laquelle E₁₄, R, R' et R" ont les mêmes définitions que ci-dessus, ou l'un des radicaux substitués (par un ou plusieurs substituants identiques ou différents) ou non-substitués suivants : alkyle, cycloalkyle ou aryle, dans lesquels ledit substituant est un atome d'halogène, le radical alkyle, nitro ou cyano.

Dans les définitions indiquées ci-dessus, l'expression halogène représente un atome de fluor, de chlore, de brome ou d'iode, de préférence chlore. L'expression alkyle représente de préférence un radical alkyle ayant de 1 à 6 atomes de carbone linéaire ou ramifié et en particulier un radical alkyle ayant de 1 à 4 atomes de carbone tels que les radicaux méthyle, éthyle, propyle, isopropyle, butyle, isobutyle, sec-butyle et tert-butyle.

Le terme haloalkyle désigne de préférence les radicaux dans lesquels le radical alkyle est tel que défini ci-dessus et est substitué par un ou plusieurs atomes d'halogène tel que défini ci-dessus comme, par exemple, bromoéthyle, trifluorométhyle, trifluoroéthyle ou encore pentafluoroéthyle. Les radicaux alkoxy peuvent correspondre aux radicaux dans lesquels le radical alkyle est tel que défini ci-dessus. On préfère les radicaux méthoxy, éthoxy, isopropyloxy ou tert-butyloxy. Les radicaux alkylthio représentent de préférence les radicaux dans lesquels le radical alkyle est tel que défini ci-dessus comme, par exemple, méthylthio ou éthylthio.

Les radicaux cycloalkyles sont choisis parmi les cycloalkyles monocycliques saturés ou insaturés. Les radicaux cycloalkyles monocycliques saturés peuvent être choisis parmi les radicaux ayant de 3 à 7 atomes de carbone tels que les radicaux cyclopropyle, cyclobutyle, cyclopentyle, cyclohexyle ou cycloheptyle. Les radicaux cycloalkyles insaturés peuvent être choisis parmi les radicaux cyclobutène, cyclopentène, cyclohexène, cyclopentanediène, cyclohexadiène. Les radicaux cycloalkoxy peuvent correspondre aux radicaux dans lesquels le radical cycloalkyle est tel que défini ci-dessus. On préfère les radicaux cyclopropyloxy, cyclopentyloxy ou cyclohexyloxy. Les radicaux cycloalkylthio peuvent correspondre aux radicaux dans lesquels le radical cycloalkyle est tel que défini ci-dessus comme par exemple cyclohexylthio.

Les radicaux aryles peuvent être de type mono ou polycycliques. Les radicaux aryles monocycliques peuvent être choisis parmi les radicaux phényle optionellement substitué par un ou plusieurs radicaux alkyle, tel que tolyle, xylyle, mésityle, cuményle. Les radicaux aryles polycycliques peuvent être choisis parmi les radicaux naphtyle, anthryle, phénanthryle. Les radicaux aryloxy peuvent correspondre aux radicaux dans lesquels le radical aryle est tel défini ci-dessus. On préfère les radicaux phénoxy, 2,4,6-tritertiobutylphénoxy, tolyloxy ou mésityloxy. Les radicaux arylthio désignent de préférence les radicaux dans lesquels le radical aryle est tel que défini ci-dessus comme par exemple dans phénylthio.

L'anion X₁⁻ peut être choisi parmi les anions non coordinants vis à vis de l'élément M tels que l'anion tétrafluoroborate, tétraphénylborate, tétrachloroaluminate, hexafluorophosphate, hexafluoroantimonate, trifluorométhanesulfonate ou perchlorate.

L'invention a plus particulièrement pour objet les produits de formule générale 1 et 2 telle que définie ci-dessus, caractérisée en ce que
M représente un atome de bore, d'aluminium ou de gallium ;
R_{M} représente l'atome d'hydrogène, un atome d'halogène et notamment le chlore, ou le radical méthyle ;
A et B représentent, indépendamment, une chaîne carbonée de 2 à 4 atomes de carbone, et notamment une chaîne carbonée de 2 atomes de carbone ;
L₁ et L₂ représentent, indépendamment, un radical de formule -E₁₅(R₁₅)- dans laquelle E₁₅ est un atome d'azote ou de phosphore et R₁₅ représente un radical de formule RR'R"E₁₄-dans laquelle E₁₄ représente un atome de carbone ou de silicium et R, R' et R" représentent, indépendamment, l'atome d'hydrogène ou un radical alkyle ; R₁₅ représente notamment le radical isopropyle et Me₃Si ;
L₃ représente un groupe de formule -E₁₅(R₁₅)- dans laquelle E₁₅ est un atome d'azote ou de phosphore et R₁₅ représente un radical alkyle, notamment le méthyle, ou un radical de formule RR'R"E₁₄- dans laquelle E₁₄ représente un atome de silicium et R, R' et R" représentent, indépendamment, un radical alkyle, et notamment méthyle ; et
R₁ représente l'atome d'hydrogène.

Plus particulièrement, l'invention a pour objet les produits décrits ci-après dans les exemples, en particulier les produits répondant aux formules suivantes :
- [(Me₃SiNCH₂CH₂)₂NSiMe₃]AlCl;
- [(Me₃SiNCH₂CH₂)₂NMe]AlCl;
- [(Me₃SiNCH₂CH₂)₂NMe]AlH;
- [(Me₃SiNCH₂CH₂)₂NMe]AlCH₃ ;
- [(Me₃SiNCH₂CH₂)₂NSiMe₃]GaCl;
- {[((CH₃)₂CHNCH₂CH₂)((CH₃)₂CHNHCH₂CH₂)NMe]AlCl} {AlCl₄};
- {[(Me₃SiNCH₂CH₂)(Me₃SiNHCH₂CH₂)NSiMe₃]AlCl} {AlCl₄}.

L'invention a également pour objet un procédé de préparation des produits de formule générale 1 et 2 telle que définie ci-dessus, caractérisé en ce que l'on fait réagir un produit de formule I

(L₁-A-L₃-B-L₂)²⁻, 2Y⁺ (I)

dans laquelle L₁, A, L₃, B et L₂ ont les significations indiquées ci-dessus et Y représente un groupement organométallique, un métal ou l'atome d'hydrogène, avec un produit de formule II

R_{M}MZ₁Z₂ (II)

dans laquelle R_{M} et M ont les significations indiquées ci-dessus et Z₁ et Z₂ représentent, indépendamment, un groupe partant, pour obtenir un produit de formule 1 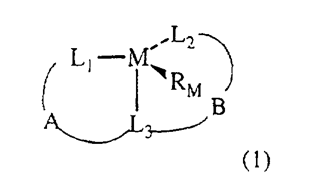 produit de formule (1) que l'on peut faire réagir avec un composé de formule (III)

R₁X₁ (III)

dans laquelle R₁ et X₁ ont la signification indiquée ci-dessus, pour obtenir le produit de formule 2 correspondant.

La réaction d'un composé de formule générale I avec un composé de formule générale II pour obtenir un composé de formule générale 1 peut être réalisée, sous atmosphère inerte telle sous atmosphère de fréon ou d'argon, dans un solvant aprotique, à une température comprise entre -60 et +50 °C. Lors de la mise en oeuvre de la réaction qui permet d'obtenir le composé 2 à partir du composé 1 correspondant, on fait réagir, sous atmosphère inerte, à température ambiante, le composé 1 avec un composé III en milieu aprotique.

L'invention a également pour objet un procédé de préparation des produits de formule générale 2 telle que définie ci-dessus, caractérisé en ce que l'on fait réagir un produit de formule (IV) 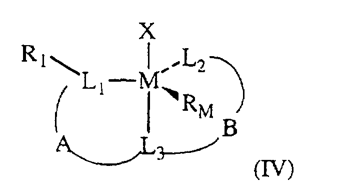 dans laquelle R₁, L₁, A, L₃, B et L₂ ont les significations indiquées ci-dessus et X représente un anion coordinant vis à vis de l'élément M, avec un composé de formule (V)

MX'₃ (V)

dans laquelle M a la signification indiquée ci-dessus et X' représente l'atome d'halogène, un radical alkyle ou alkoxy comme défini précédemment, pour obtenir le produit 2 correspondant.

La réaction d'obtention d'un composé de formule générale 2 à partir du composé de formule générale IV correspondant, peut être réalisée, sous atmosphère inerte telle sous atmosphère de fréon ou d'argon, à température ambiante, avec le composé V en milieu aprotique. Le composé 2 peut également être obtenu à partir du composé IV selon toute autre méthode connu de l'homme de l'art, permettant d'arracher un anion coordinant d'un élément du groupe 13.

Quelle que soit la méthode de préparation mise en oeuvre, les composés 1 et 2 ainsi obtenus sont purifiés par les méthodes classiques de purification. Le composé 2 peut également être préparé in situ, à partir du composé IV, dans le milieu dans lequel il est utilisé ultérieurement.

Le produit de formule IV peut être obtenu en faisant réagir un composé de formule VI

(R₁L₁-A-L₃-B-L₂)-, Y₁⁺ (VI)

dans laquelle R₁, L₁, A, L₃, B et L₂ ont les significations indiquées ci-dessus et Y₁ représente un groupement organométallique, un métal ou l'atome d'hydrogène, avec un produit de formule VII

R_{M}MXZ₃ (VII)

dans laquelle R_{M}, M et X ont les significations indiquées ci-dessus et Z₃ représente un groupe partant. La réaction peut être mise en oeuvre sous atmosphère inerte telle sous atmosphère de fréon ou d'argon, dans un solvant aprotique, à une température comprise entre -60 et +50 °C.

Le produit de formule IV peut également être obtenu en faisant réagir un composé de formule 1 telle que définie ci-dessus, avec un composé de formule (VIII) R₁X dans laquelle R₁ et X ont la signification indiquée ci-dessus. La réaction peut être mise en oeuvre sous atmosphère inerte telle sous atmosphère de fréon ou d'argon, dans un solvant aprotique, à une température comprise entre -60 et +50 °C.

En tant que solvant aprotique, on peut utiliser les hydrocarbures aromatiques tels que benzène, toluène; des hydrocarbures aliphatiques tels que pentane, heptane, hexane, cyclohexane; des éthers tels que le diéthyl éther. dioxane, tétrahydrofurane, éthyltertiobutyl éther.

Dans les composés I et VI, Y et Y₁ représentent, indépendamment, un groupement organométallique, un métal ou l'atome d'hydrogène. Le groupement organométallique peut être un composé de formule R"'M₁ ou R"'₃M₂ dans laquelle R"' représente un radical alkyle, cycloalkyle, aryle, alkoxy, cycloalkoxy ou aryloxy défini comme précédemment, M₁ est un atome de zinc ou de mercure et M₂ un atome d'étain ou de plomb ; de préférence, le groupement organométallique est choisi parmi les groupements ZnMe, SnMe₃, SnBu₃ ou PbMe₃. Le métal peut être un métal alcalin choisi parmi le lithium, le sodium ou le potassium, ou un métal alcalino-terreux tel que le magnésium.

Dans les composés II et VII, Z₁, Z₂ et Z₃ représentent, indépendamment un groupe partant tel qu'un atome d'halogène, un groupement alkyle, cycloalkyle, alkoxy, aryle ou aryloxy défini comme précédemment, ou encore un méthanesulphonyloxy, un benzènesulphonyloxy, p-toluènesulphonyloxy.

Dans le composé IV, X représente un anion coordinant vis à vis de l'élément M. L'anion X peut être un anion de type halogène ou chalcogène. De préférence, X représente un atome de chlore ou de brome.

Le produit de départ de formule I et le produit de formule VI sont des produits connus ou peuvent être préparés à partir de produits connus. Pour leur synthèse, on peut citer les références suivantes : Cloke et coll., J. Chem. Soc., Dalton Trans. (1995) 25; Wilkinson and Stone, Comprehensive Organometallic Chemistry (1982) vol. 1, 557.

Les produits de formule III et VIII sont commerciaux ou peuvent être fabriqués par les méthodes connues de l'homme de métier.

Les produits de formule IV sont nouveaux. L'invention a donc également pour objet, à titre de produits industriels nouveaux, les composés de formule IV telle que définie ci-dessus.

L'invention a également pour objet l'utilisation des produits de formule 1 et 2 telle que définie ci-dessus, en tant que catalyseurs pour la mise en oeuvre de (co)polymérisation, c'est à dire de polymérisation ou copolymérisation. Les composés de formule 1 et 2 sont particulièrement intéressants pour la mise en oeuvre de polymérisation d'hétérocycles. Les hétérocycles peuvent contenir un ou plusieurs hétéroatomes des groupes 15 et/ou 16, et posséder une taille allant de trois à huit chaînons. A titre d'exemple d'hétérocycles répondant à la formulation ci-avant, on peut citer les époxydes, les thioépoxydes, les esters ou thioesters cycliques tels que les lactones, les lactames et les anhydrides. Les composés de formule 1 et 2 sont particulièrement intéressants également pour la mise en oeuvre de (co)polymérisation d'esters cycliques. A titre d'exemple d'esters cycliques, on peut citer les esters cycliques polymères de l'acide lactique et/ou glycolique. Des copolymères statistiques ou séquencés peuvent être obtenus selon que les monomères sont introduits ensemble au début de la réaction. ou séquentiellement au cours de la réaction.

L'invention a également pour objet un procédé de préparation de polymères ou copolymères qui consiste à mettre en présence un ou plusieurs monomères, un catalyseur de polymérisation et un solvant de polymérisation, caractérisé en ce que le catalyseur de polymérisation est choisi parmi les produits de l'invention.

Le solvant de la réaction peut être le (ou l'un des) substrat(s) mis en oeuvre dans la réaction catalytique. Des solvants qui n'interfèrent pas avec la réaction catalytique elle-même, conviennent également. A titre d'exemple de tels solvants, on peut citer les hydrocarbures saturés ou aromatiques, les éthers, les halogénures aliphatiques ou aromatiques.

Les réactions sont conduites à des températures comprises entre la température ambiante et environ 150 °C ; la plage de température comprise entre 40 et 100 °C s'avère plus avantageuse. Les durées de réaction sont comprises entre 1 et 300 heures, et de préférence entre 4 et 72 heures.

Les produits sont généralement récupérés après addition, dans le milieu réactionnel, d'un solvant protique tel qu'un alcool, ou aprotique tel que le tétrahydrofurane, suivie de l'élimination des composés de l'élément M par centrifugation.

Ce procédé de (co)polymérisation convient particulièrement bien pour l'obtention de (co)polymères d'esters cycliques, notamment les esters cycliques polymères de l'acide lactique et/ou glycolique. Les produits obtenus tels que le copolymère lactique glycolique, biodégradables, sont avantageusement utilisés comme support dans des compositions thérapeutiques à libération prolongée. Le procédé convient particulièrement bien également à la polymérisation des époxydes, notamment de l'oxyde de propène. Les polymères obtenus sont des composés qui peuvent être utilisés pour la synthèse de cristaux liquides organiques ou encore comme membranes semi-perméables.

Les exemples suivants sont présentés pour illustrer les procédures ci-dessus et ne doivent en aucun cas être considérés comme une limite à la portée de l'invention.

### Exemple 1: [(Me₃SiNCH₂CH₂)₂NSiMe₃]AlCl Composé 1 dans lequel M = Al ; R_{M} = Cl ; A = B = -CH₂CH₂- ; L₁ = L₂ = L₃ = NSiMe₃

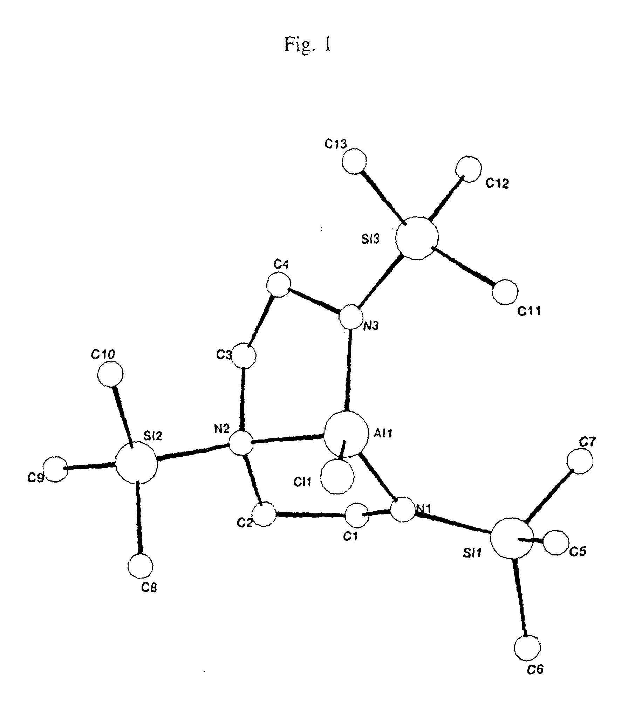

Dans un tube de Schlenk muni d'un barreau aimanté et purgé sous argon, on introduit successivement 3,26 g (9,6 mmol) de [(Me₃SiNCH₂CH₂)₂NSiMe₃]²⁻, 2Li⁺ et 100 ml de tétrahydrofurane. Le mélange réactionnel est refroidi à -40 °C, puis on introduit 1,33 g (10 mmol) de trichlorure d'aluminium en solution dans 100 ml de tétrahydrofurane. Le mélange réactionnel est laissé revenir à température ambiante puis laissé sous agitation pendant 18 heures à température ambiante. Le solvant est alors évaporé. Le résidu est sublimé sous vide (0,05 torr) à 80 °C. Le composé souhaité est isolé sous forme de cristaux blancs. Ce composé est caractérisé par diffraction des rayons-X (Figure 1 et tableau 1 ci-dessous). Point de fusion 10-13 °C.

### Exemple 2: [(Me₃SiNCH₂CH₂)₂NMe]AlCl Composé 1 dans lequel M = Al ; R_{M} = Cl ; A = B = -CH₂CH₂-, L₁ = L₂ = NSiMe₃ ; L₃ = NMe

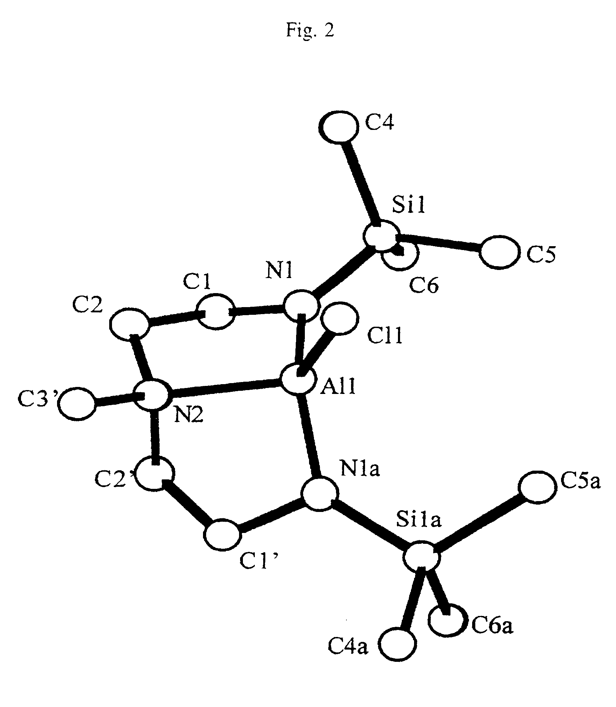

Ce composé est préparé selon la procédure décrite ci-dessus. Ce composé est caractérisé par diffraction des rayons-X (Figure 2 et tableau 1 ci-dessous). Point de fusion 130 °C (décomposition).

### Exemple 3 : [(Me₃SiNCH₂CH₂)₂NMe]AlH Composé 1 dans lequel M = Al ; R_{M} = H ; A = B = -CH₂CH₂- L₁ = L₂ = NSiMe₃ ; L₃ = NMe

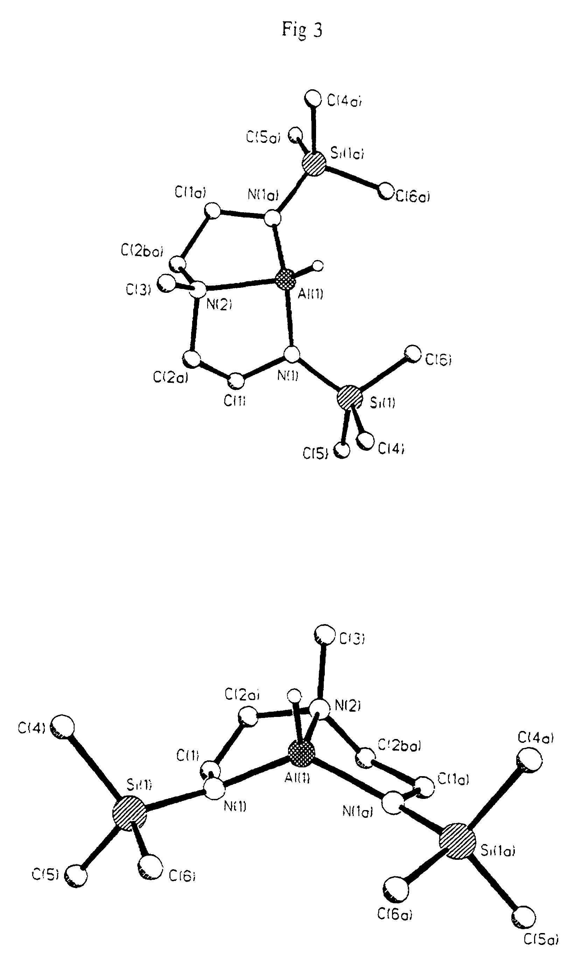

Dans un tube de Schlenk muni d'un barreau aimanté et purgé sous argon, on introduit successivement 2,30 g (8,8 mmol) de (Me₃SiNHCH₂CH₂)₂NMe et 50 ml de tétrahydrofurane. Le mélange réactionnel est refroidi à -40 °C, puis on introduit 0,33 g (8,8 mmol) de LiAlH₄ en suspension dans 70 ml de tétrahydrofurane. Le dégagement d'un gaz est observé. Le mélange réactionnel est laissé revenir à température ambiante ; il est laissé sous agitation pendant 18 heures à température ambiante. Après filtration, le solvant est évaporé puis le résidu est sublimé sous vide (0,05 torr) à 90 °C. Le composé souhaité est isolé sous forme de cristaux blancs. Ce composé est caractérisé par diffraction des rayons-X (Figure 3 et tableau 1 ci-dessous). Point de fusion 15 °C.

### Exemple 4: [(Me₃SiNCH₂CH₂)₂NMe]AlCH₃ Composé 1 dans lequel M = Al ; R_{M} = CH₃ ; A = B = -CH₂CH₂- L₁ = L₂ = NSiMe₃ ; L₃ = NMe

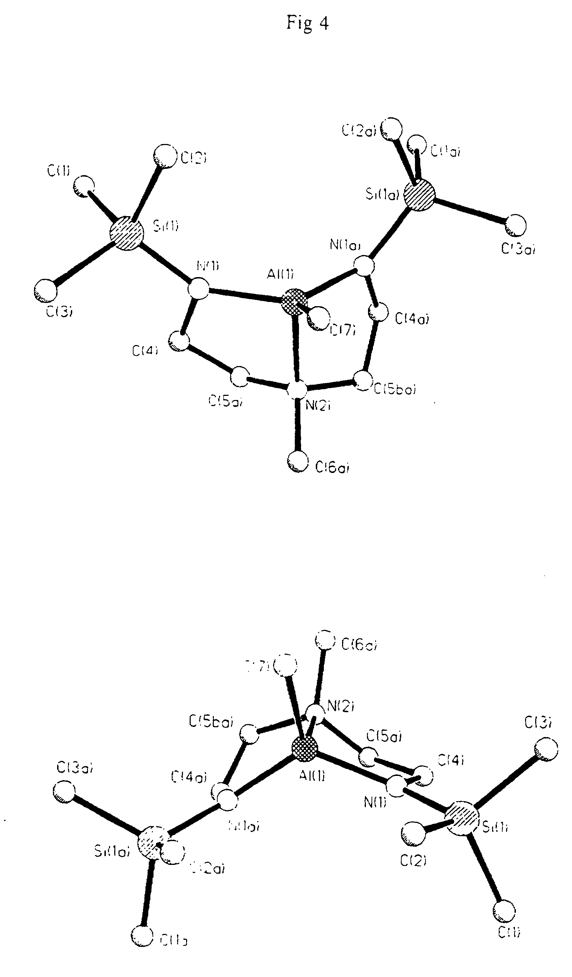

Dans un tube de Schlenk muni d'un barreau aimanté et purgé sous argon, on introduit successivement 3,53 g (8,8 mmol) de (Me₃SiNHCH₂CH₂)₂NMe et 50 ml de tétrahydrofurane. Le mélange réactionnel est refroidi à -60 °C, puis on introduit 6,7 ml d'une solution toluènique 2 M de AlMe₃. Le mélange réactionnel est laissé revenir à température ambiante, puis il est chauffé à 100°C pendant 12 heures. Le solvant est évaporé puis le résidu est sublimé sous vide (0,05 torr) à 70 °C. Le composé souhaité est isolé sous forme de cristaux blancs. Ce composé est caractérisé par diffraction des rayons-X (Figure 4 et tableau 1 ci-dessous). Point de fusion 67 °C.

### Exemple 5 : [(Me₃SiNCH₂CH₂)₂NSiMe₃]GaCl Composé 1 dans lequel M = Ga : R_{M} = Cl ; A = B = -CH₂CH₂- L₁ = L₂ = L₃ = NSiMe₃

Dans un tube de Schlenk muni d'un barreau aimanté et purgé sous argon, on introduit successivement 1,34 g (4,0 mmol) de [(Me₃SiNCH₂CH₂)₂NSiMe₃]²⁻, 2Li⁺ et 50 ml de tétrahydrofurane. Le mélange réactionnel est refroidi à -40 °C, puis on introduit 0,33 (8,8 mmol) de GaCl₃ en solution dans 50 ml de tétrahydrofurane. Le mélange réactionnel est laissé revenir à température ambiante, puis il est laissé sous agitation pendant 18 heures à température ambiante. La formation d'un précipité est observée. Après filtration, le solvant est évaporé. Le résidu est sublimé sous vide (0,05 torr) à 90 °C. Le composé souhaité est isolé sous forme de cristaux blancs. Ce composé est caractérisé par résonance magnétique multinucléaire. Point de fusion 62°C.

RMN ¹H(C₆D₆ ; 400 MHz) : 0,18 (s, SiCH₃, 9H) ; 0,46 (s, SiCH₃, 18H) ; 1,98 (ddd, J=12,2 ; 5,0 ; 5,0 Hz; CH₂, 2H) ; 2,44 (ddd, J=12,2 ; 7,4 ; 5,2 Hz; CH₂, 2H) ; 2,94 (ddd, J=12,2 ; 5,0 ; 5,0 Hz; CH₂, 2H) ; 3,00 (ddd, J=12,2 ; 7,4 ; 5,0 Hz; CH₂, 2H).

RMN ¹³C{¹H}(C₆D₆ ; 100,63 MHz) : 1,42 (SiCH₃) ; 1,82 (SiCH₃) ; 44,20 (CH₂) ; 54,21 (CH₂).

RMN ²⁹Si (C₆D₆ ; 79,49 MHz) : -3,70 ; -3,05.

### Exemple 6: {[((CH₃)₂CHNCH₂CH₂)((CH₃)₂CHNHCH₂CH₂)NMe]AlCl} {AlCl₄} Composé 2 dans lequel M = Al ; R_{M} = Cl ;R₁ = H ; A = B = -CH₂CH₂- L₁ = L₂ =NCH(CH₃)₂ ; L₃ = NMe ; X₁⁻ = AlCl₄⁻

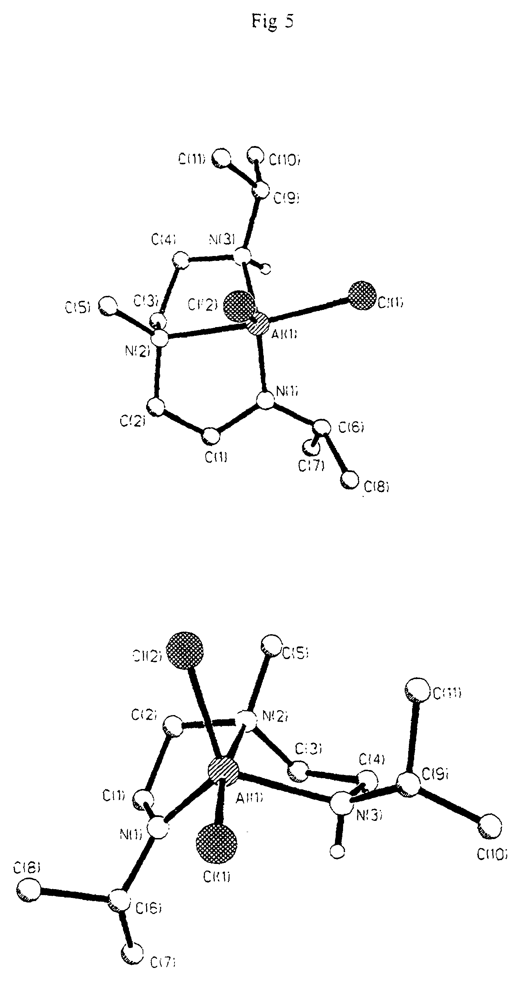

Dans un tube de Schlenk muni d'un barreau aimanté et purgé sous argon, on introduit successivement 1,03 g (3,2 mmol) de [Me₂CHNCH₂CH₂)₂NCH₃]AlCl et 30 ml de toluène. Le mélange réactionnel est refroidi à -40 °C, puis on introduit 3,2 mmol d'acide chlorhydrique en solution dans le diéthyléther. Le mélange réactionnel est laissé revenir à température ambiante ; il est laissé sous agitation pendant 18 heures à température ambiante. Le solvant est alors évaporé jusqu'à un volume de 5 ml et laissé à -30°C. Le composé (IV) ainsi obtenu est isolé sous forme de cristaux blancs. Ce composé est caractérisé par diffraction des rayons-X (Figure 5 et tableau 1 ci-dessous ; point de fusion 160°C (décomposition)). L'addition d'un équivalent de trichlorure d'aluminium en suspension dans le toluène permet d'obtenir le composé souhaité.

### Exemple 7 : {[(Me₃SiNCH₂CH₂) (Me₃SiNHCH₂CH₂)NSiMe₃]AlCl} {AlCl₄} Composé 2 dans lequel M = Al ; R_{M} = Cl ; R₁ = H ; A = B = -CH₂CH₂- L₁ = L₂ = L₃ = NSiMe₃ ; X⁻ = AlCl₄⁻

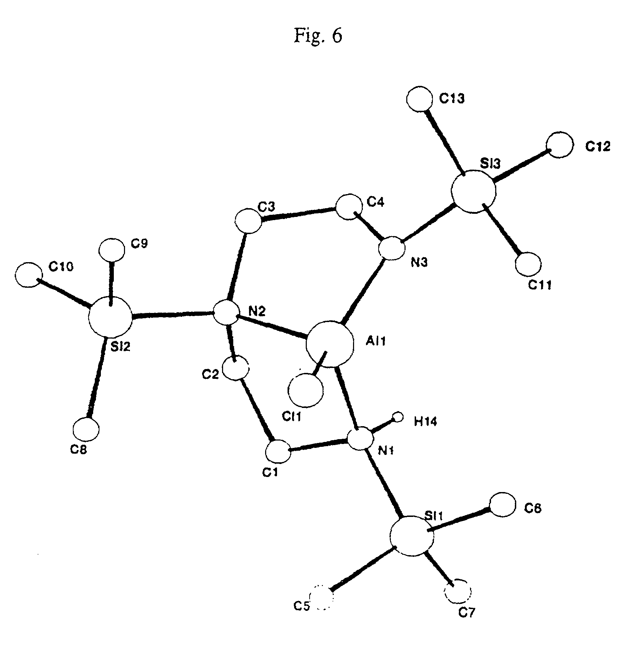

Dans un tube de Schlenk muni d'un barreau aimanté et purgé sous argon, on introduit successivement 0,19 g (0,5 mmol) de [(Me₃SiNCH₂CH₂)₂NSiMe₃]AlCl, 4 ml de toluène et 1 mmol d'acide chlorhydrique en solution dans le diéthyléther. La formation d'un précipité est observé. 89 mg (0,67 mmol) de trichlorure d'aluminium en suspension dans 3 ml de toluène sont alors ajoutés à température ambiante. Le mélange réactionnel redevient homogène ; il est laissé sous agitation pendant une heure à température ambiante. Le solvant est alors évaporé jusqu'à un volume de 0,5 ml et laissé à température ambiante. Le composé souhaité est isolé sous forme de cristaux blancs. Ce composé est caractérisé par diffraction des rayons-X (Figure 6 et tableau 1 ci-dessous).

### Exemple 8: Polymérisation de l'oxyde de propène

Dans un tube de Schlenk muni d'un barreau aimanté et purgé sous argon, on introduit successivement 0,15 g (0,4 mmol) de [(Me₃SiNCH₂CH₂)₂NSiMe₃]AlCl et 4,5 ml (63 mmol) d'oxyde de propène. Le mélange réactionnel est laissé sous agitation à 30 °C pendant 144 heures, l'excès d'oxyde de propène est évaporé, puis on ajoute 20 ml de méthanol. Après centrifugation, la phase liquide est récupérée, le solvant évaporé. 0,55 g d'un mélange d'oligomères et de polymères est obtenu. Ce mélange est caractérisé par RMN du carbone et du proton. Selon une analyse par GPC (Gel Permea Chromatography) à l'aide d'un étalonnage réalisé à partir de standards de polyéthylène glycol (PEG) de masses 194 à 22000 et extrapolée pour les masses plus fortes, l'échantillon est composé d'oligomères de masse moyenne 798 daltons et de polymères ayant des masses voisines (Mw/Mn=1,69) et Mw=106904 daltons.

### Exemple 9 : Polymérisation de l'oxyde de propène

Les conditions opératoires sont celles de l'exemple 8, excepté que le cation chiral {[(Me₃SiNCH₂CH₂)(Me₃SiNHCH₂CH₂)NSiMe₃]AlCl}{AlCl₄} est utilisé comme catalyseur. Après centrifugation, la phase liquide est récupérée, le solvant est évaporée. 2,17 g d'un mélange de polymères sont obtenus. Ce polymère est caractérisé par RMN du carbone et du proton. Selon une analyse par GPC, à l'aide d'un étalonnage réalisé à partir de standards de polyéthylène glycol (PEG) de masses 194 à 22000, l'échantillon est un mélange de polymères de masses très proches (Mw/Mn=1,17) et Mw=1446 daltons.

### Exemple 10 : Polymérisation du D,L-lactide

Dans un tube de Schlenk muni d'un barreau aimanté et purgé sous argon, on introduit successivement 0,05 g (0,17 mmol) de [(Me₃SiNCH₂CH₂)₂NMe]AlH, 1,15 g de D,L-lactide et 30 ml de toluène. Le mélange réactionnel est laissé sous agitation à 80 °C pendant 120 heures. Le solvant est évaporé, puis on ajoute 20 ml de THF. Après centrifugation, la phase liquide est récupérée, le solvant évaporé. 1,04 g d'un mélange de D,Llactide (32 %) et de polymères (68 %) est obtenu. Ce mélange est caractérisé par RMN du carbone et du proton. Selon une analyse par GPC à l'aide d'un étalonnage réalisé à partir de standards de polyéthylène glycol de masses 194 à 22000 et extrapolée pour les masses plus fortes, les polymères sont un mélange de macromolécules de masses voisines (Mw/Mn = 1,61) et Mw = 21659.

### Exemple 11 : Polymérisation d'un mélange D,L-lactide et glycolide

Dans un tube de Schlenk muni d'un barreau aimanté et purgé sous argon, on introduit successivement 0,08 g (0,17 mmol) de {[(Me₃SiNCH₂CH₂) (Me₃SiNHCH₂CH₂)NSiMe₃]AlCl}{AlCl₄}, 0,17 g (3 mmol) d'oxyde de propylène. Le mélange réactionnel est laissé sous agitation à 30°C pendant 1,5 heures puis l'oxyde de propylène est évaporé. On introduit successivement 1,15 g de D,L-lactide, 0,93 g de glycolide et 30 ml de benzène. Le mélange réactionnel est laissé sous agitation à 80 °C pendant 240 heures. Le solvant est évaporé, puis on ajoute 20 ml de THF. Après centrifugation, la phase liquide est récupérée, le solvant évaporé. 1,47 g d'un mélange de copolymères est obtenu. Ce mélange est caractérisé par RMN du carbone et du proton. Selon une analyse par GPC à l'aide d'un étalonnage réalisé à partir de standards de polyéthylène glycol de masses 194 à 22000 et extrapolée pour les masses plus fortes, l'échantillon est un mélange de copolymères (Mw/Mn = 1,98) et Mw = 1962.

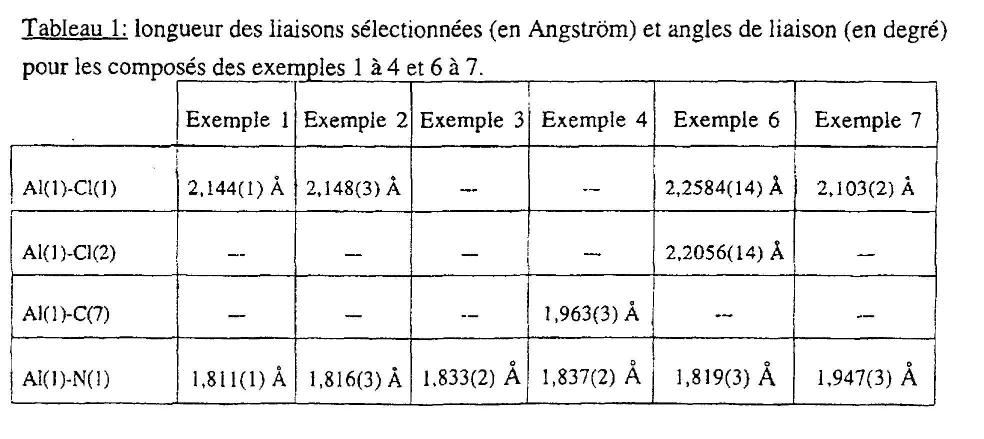

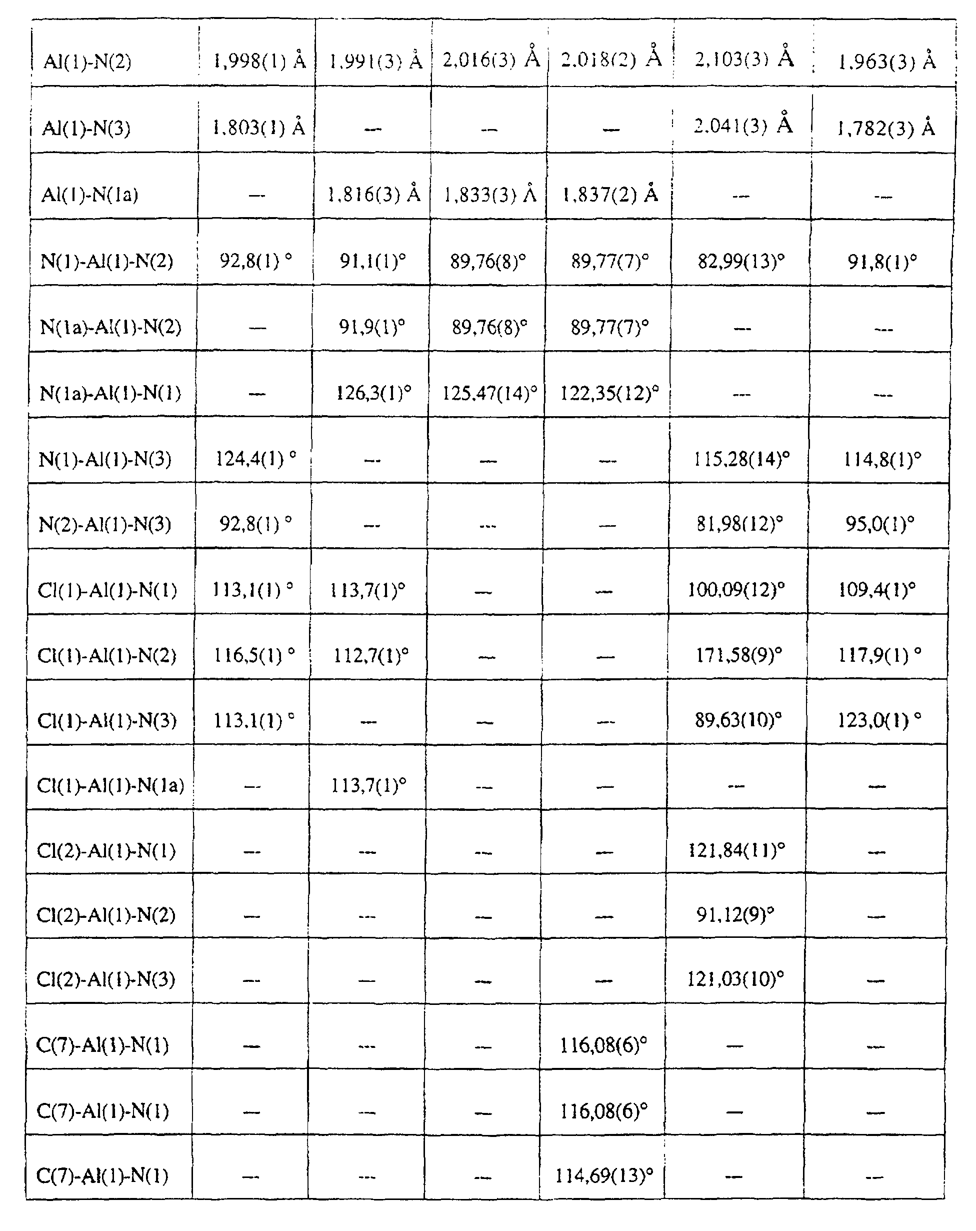

## Revendications

1. Les composés de formule générale 1 et 2 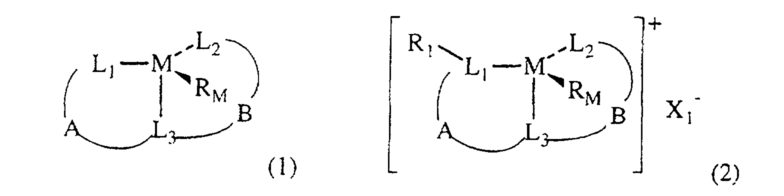 dans laquelle
M représente un élément du groupe 13 ;
R_{M} représente l'atome d'hydrogène, un atome d'halogène ou l'un des radicaux substitués ou non-substitués suivants : alkyle, cycloalkyle, aryle, alkoxy, cycloalkoxy, aryloxy, alkylthio, cycloalkylthio ou arylthio, dans lesquels ledit substituant est un atome d'halogène, le radical alkyle, nitro ou cyano ;
A et B représentent, indépendamment, une chaîne carbonée de 2 à 4 atomes de carbone, optionellement substituée par l'un des radicaux substitués ou non substitués suivants : alkyle, cycloalkyle ou aryle, dans lesquels ledit substituant est un atome d'halogène, le radical alkyle, nitro ou cyano ;
L₁, L₂ et L₃ représentent, indépendamment, un groupe de formule -E₁₅(R₁₅)- dans laquelle
E₁₅ est un élément du groupe 15 et
R₁₅ représente l'atome d'hydrogène ; l'un des radicaux substitués ou non-substitués suivants : alkyle, cycloalkyle ou aryle, dans lesquels ledit substituant est un atome d'halogène, le radical alkyle, nitro ou cyano ; un radical de formule RR'R"E₁₄- dans laquelle E₁₄ est un élément du groupe 14 et R, R' et R" représentent, indépendamment, l'atome d'hydrogène ou l'un des radicaux substitués ou non-substitués suivants : alkyle, cycloalkyle, aryle, alkoxy, cycloalkoxy, aryloxy, alkylthio, cycloalkylthio ou arylthio, dans lesquels ledit substituant est un atome d'halogène, le radical alkyle, nitro ou cyano ; ou un radical de formule SO₂R'₁₅ dans laquelle R'₁₅ représente un atome d'halogène, un radical alkyle, haloalkyle ou aryle éventuellement substitué par un ou plusieurs substituants choisis parmi les radicaux alkyle, haloalkyle et halogène ;
X₁⁻ représente un anion non coordinant vis à vis de l'élément M;
R₁ représente un atome d'hydrogène, un radical de formule RR'R"E₁₄- dans laquelle E₁₄, R. R' et R" ont les mêmes définitions que ci-dessus. ou l'un des radicaux substitués ou non-substitués suivants : alkyle, cycloalkyle ou aryle, dans lesquels ledit substituant est un atome d'halogène, le radical alkyle, nitro ou cyano.

2. Les composés de formule générale 1 et 2 telle que définie à la revendication 1, **caractérisée en ce que**
M représente un atome de bore, d'aluminium ou de gallium ;
R_{M} représente l'atome d'hydrogène, un atome d'halogène et notamment le chlore, ou le radical méthyle ;
A et B représentent, indépendamment, une chaîne carbonée de 2 à 4 atomes de carbone, et notamment une chaîne carbonée de 2 atomes de carbone ;
L₁ et L₂ représentent, indépendamment, un radical de formule -E₁₅(R₁₅)- dans laquelle E₁₅ est un atome d'azote ou de phosphore et R₁₅ représente un radical de formule RR'R"E₁₄- dans laquelle E₁₄ représente un atome de carbone ou de silicium et R, R' et R" représentent, indépendamment, l'atome d'hydrogène ou un radical alkyle ;
L₃ représente un groupe de formule -E₁₅(R₁₅)- dans laquelle E₁₅ est un atome d'azote ou de phosphore et R₁₅ représente un radical alkyle ou un radical de formule RR'R"E₁₄- dans laquelle E₁₄ représente un atome de silicium et R, R' et R" représentent, indépendamment, un radical alkyle ; et
R₁ représente un atome d'hydrogène.

3. Les composés de formule générale 1 et 2 telle que définie à la revendication 2, **caractérisée en ce que**
R_{M} représente l'atome d'hydrogène, l'atome de chlore ou le radical méthyle ;
A et B représentent, indépendamment, une chaîne carbonée de 2 atomes de carbone ;
L₁ et L₂ représentent, indépendamment, le radical isopropylamino ou Me₃SiN ;
L₃ représente le radical méthylamino ou Me₃SiN ; et

4. Les composés de formule générale 1 telle que définie à l'une des revendications 1 à 3 et répondant aux formules suivantes :
- [(Me₃SiNCH₂CH₂)₂NSiMe₃]AlCl ;
- [(Me₃SiNCH₂CH₂)₂NMe]AlCl;
- [(Me₃SiNCH₂CH₂)₂NMe]AlH ;
- [(Me₃SiNCH₂CH₂)₂NMe]AlCH₃ ;
- [(Me₃SiNCH₂CH₂)₂NSiMe₃]GaCl;
- {[((CH₃)₂CHNCH₂CH₂)((CH₃)₂CHNHCH₂CH₂)NMe]AlCl}{AlCl₄};
- {[(Me₃SiNCH₂CH₂)(Me₃SiNHCH₂CH₂)NSiMe₃]AlCl} {AlCl₄}.

5. Procédé de préparation des produits de formule générale 1 et 2 telle que définie à la revendication 1, **caractérisé en ce que** l'on fait réagir un produit de formule I
(L₁-A-L₃-B-L₂)²⁻, 2Y⁺ I
dans laquelle L₁, A, L₃, B et L₂ ont les significations indiquées à la revendication 1 et Y représente un groupement organométallique, un métal ou l'atome d'hydrogène, avec un produit de formule II
R_{M}MZ₁Z₂ (II)
dans laquelle R_{M} et M ont les significations indiquées à la revendication 1 et Z₁ et Z₂ représentent, indépendamment, un groupe partant, pour obtenir un produit de formule 1 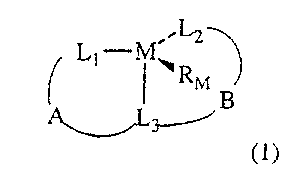 produit de formule (1) que l'on peut faire réagir avec un composé de formule (III)
R₁X₁ (III)
dans laquelle R₁ et X₁ ont la signification indiquée à la revendication 1, pour obtenir le produit de formule 2 correspondant.

6. Procédé de préparation des produits de formule générale 2 telle que définie à la revendication 1, **caractérisé en ce que** l'on fait réagir un produit de formule IV 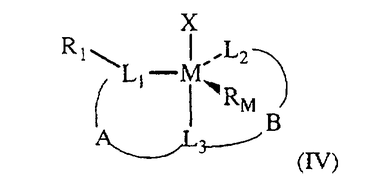 dans laquelle R₁, L₁, A, L₃, B et L₂ ont les significations indiquées à la revendication 1 et X représente un anion coordinant vis à vis de l'élément M, avec un composé de formule (V)
MX'₃ (V)
dans laquelle M a la signification indiquée à la revendication 1 et X' représente un atome d'halogène, un radical alkyle ou alkoxy, pour obtenir le produit 2 correspondant.

7. Utilisation des produits de formule 1 ou 2 telle que définie à l'une quelconque des revendications 1 à 4. en tant que catalyseur de (co)polymérisation.

8. Utilisation selon la revendication 7 pour la (co)polymérisation d'hétérocycles, notamment les époxydes tels que l'oxyde de propylène.

9. Utilisation selon la revendications 7, pour la (co)polymérisation d'esters cycliques, notamment les esters cycliques polymères de l'acide lactique et/ou glycolique.

10. Procédé de préparation de polymères ou copolymères qui consiste à mettre en présence un ou plusieurs monomères, un catalyseur de polymérisation et un solvant de polymérisation, à une température comprise entre la température ambiante et 150 °C pendant 1 à 300 heures, **caractérisé en ce que** le catalyseur de polymérisation est choisi parmi les produits des revendications 1 à 4.

11. Procédé selon la revendication 10, **caractérisé en ce que** le monomère est choisi parmi les époxydes, et notamment l'oxyde de propène, ou les esters cycliques, et notamment les esters cycliques polymères de l'acide lactique et/ou glycolique.

12. A titre de produits industriels nouveaux, les composés de formule IV telle définie à la revendication 6.

## Patentansprüche

1. Verbindungen der allgemeinen Formeln 1 und 2 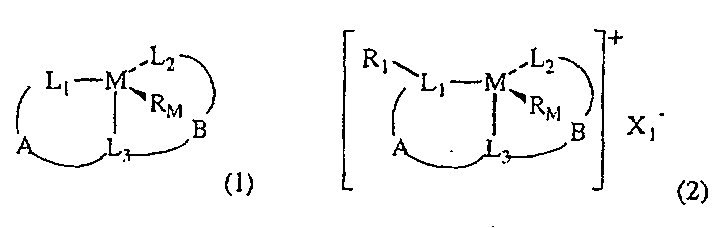 in denen
M ein Element der Gruppe 13 darstellt,
R_{M} ein Wasserstoffatom, ein Halogenatom oder einen der folgenden substituierten oder nichtsubstituierten Reste darstellt: Alkyl, Cycloalkyl, Aryl, Alkoxy, Cycloalkoxy, Aryloxy, Alkylthio, Cycloalkylthio oder Arylthio, in denen der Substituent ein Halogenatom, ein Alkyl-, Nitro- oder Cyanorest ist,
A und B unabhängig voneinander eine kohlenstoffhaltige Kette von 2 bis 4 Kohlenstoffatomen darstellen, die wahlweise durch einen der folgenden substituierten oder nichtsubstituierten Reste substituiert ist: Alkyl, Cycloalkyl oder Aryl, in denen der Substituent ein Halogenatom, ein Alkyl-, Nitro- oder Cyanorest ist; L₁, L₂ und L₃ unabhängig voneinander eine Gruppe der Formel -E₁₅(R₁₅)- darstellen, in der
E₁₅ ein Element der Gruppe 15 ist und
R₁₅ folgendes darstellt: ein Wasserstoffatom; einen der folgenden substituierten oder nichtsubstituierten Reste: Alkyl, Cykloalkyl oder Aryl, in denen der Substituent ein Halogenatom, ein Alkyl-, Nitro- oder Cyanorest ist; einen Rest der Formel RR'R"E₁₄-, in der E₁₄ ein Element der Gruppe 14 ist und R, R' und R" unabhängig voneinander ein Wasserstoffatom oder einen der folgenden substituierten oder nichtsubstituierten Reste darstellen: Alkyl, Cycloalkyl, Aryl, Alkoxy, Cycloalkoxy, Aryloxy, Alkylthio, Cycloalkylthio oder Arylthio, in denen der Substituent ein Halogenatom, ein Alkyl-, Nitro- oder Cyanorest ist; oder einen Rest der Formel SO₂R'₁₅, in der R'₁₅ ein Wasserstoffatom, einen Alkyl-, Halogenalkyl- oder Arylrest darstellt, der gegebenenfalls durch einen oder mehrere Substituenten substituiert ist, die aus den Alkyl-, Halogenalkyl- und Halogenresten ausgewählt sind;
X₁⁻ ein in Bezug auf das Element M nicht koordinativ bindendes Anion darstellt; R₁ ein Wasserstoffatom, einen Rest der Formel RR'R"E₁₄-, in der E₁₄, R, R' und R" dieselben Bedeutungen wie oben haben, oder einen der folgenden substituierten oder nicht substituierten Reste darstellt: Alkyl, Cycloalkyl oder Aryl, in denen der Substituent ein Halogenatom, ein Alkyl-, Nitro- oder Cyanorest ist.

2. Verbindungen der allgemeinen Formeln 1 und 2 gemäß Anspruch 1, **dadurch gekennzeichnet, dass**
M ein Bor-, Aluminium- oder Galliumatom darstellt;
R_{M} ein Wasserstoffatom, ein Halogenatom, insbesondere Chlor, oder einen Methylrest darstellt;
A und B unabhängig voneinander eine kohlenstoffhaltige Kette mit 2 bis 4 Kohlenstoffatomen, insbesondere eine kohlenstoffhaltige Kette mit 2 Kohlenstoffatomen, darstellen;
L₁ und L₂ unabhängig voneinander einen Rest der Formel -E₁₅(R₁₅)- darstellen, in der E₁₅ ein Stickstoff- oder Phosphoratom ist und R₁₅ einen Rest der Formel RR'R"E₁₄- darstellt, in der E₁₄ ein Kohlenstoff- oder Siliciumatom darstellt und
R, R' und R" unabhängig voneinander ein Wasserstoffatom oder einen Alkylrest darstellen;
L₃ eine Gruppe der Formel -E₁₅(R₁₅)- darstellt, in der E₁₅ ein Stickstoff- oder Phosphoratom ist und R₁₅ einen Alkylrest oder einen Rest der Formel RR'R"E₁₄-darstellt, in der E₁₄ ein Siliciumatom darstellt und R, R' und R" unabhängig voneinander einen Alkylrest darstellen; und
R₁ ein Wasserstoffatom darstellt.

3. Verbindungen der allgemeinen Formeln 1 und 2 gemäß Anspruch 1, **dadurch gekennzeichnet, dass**
R_{M} ein Wasserstoffatom, ein Cloratom oder einen Methylrest darstellt;
A und B unabhängig voneinander eine kohlenstoffhaltige Kette mit 2 Kohlenstoffatomen darstellen;
L₁ und L₂ unabhängig voneinander einen Isopropylaminorest oder Me₃SiN darstellen; L₃ einen Methylaminorest oder Me₃SiN darstellt.

4. Verbindungen der allgemeinen Formel 1 gemäß einem der Ansprüche 1 bis 3, die den folgenden Formeln entsprechen:
[(Me₃SlNCH₂CH₂)₂NSiMe₃]AlCl;
[(Me₃SiNCH₂CH₂)₂NMe]AlCl;
[(Me₃SiNCH₂CH₂)₂NMe]AlH;
[(Me₃SiNCH₂CH₂)₂NMe]AlCH₃;
[(Me₃SiNCH₂CH₂)₂NSiMe₃]GaCl;
{[((CH₃)₂CHNCH₂CH₂) ((CH₃)₂CHNHCH₂CH₂)NMe]AlCl}{AlCl₄};
{[(Me₃SiNCH₂CH₂) (Me₃SiNHCH₂CH₂)NSiMe₃]AlCl}{AlCl₄}.

5. Verfahren zur Herstellung von Produkten der allgemeinen Formeln 1 und 2 gemäß Anspruch 1, **dadurch gekennzeichnet, dass** man ein Produkt der Formel I
(L₁-A-L₃-B-L₂)²⁻, 2Y⁺ (I)
in der L₁, A, L₃, B und L₂ die in Anspruch 1 angegebenen Bedeutungen haben und Y eine metallorganische Gruppe, ein Metall oder ein Wasserstoffatom darstellt, mit einem Produkt der Formel II
R_{M}MZ₁Z₂ (II)
in der R_{M} und M die in Anspruch 1 genannten Bedeutungen haben und Z₁ und Z₂ unabhängig voneinander eine Abgangsgruppe darstellen, reagieren lässt, um ein Produkt der Formel 1 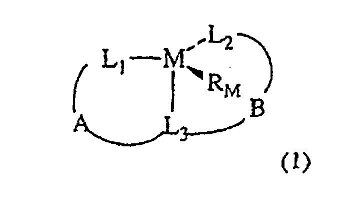 zu erhalten, das man mit einer Verbindung der Formel (III)
R₁X₁ (III)
in der R₁ und X₁ die in Anspruch 1 genannte Bedeutung haben, reagieren lassen kann, um das entsprechende Produkt der Formel 2 zu erhalten.

6. Verfahren zur Herstellung der Produkte der allgemeinen Formel 2 gemäß Anspruch 1, **dadurch gekennzeichnet, dass** man ein Produkt der Formel IV 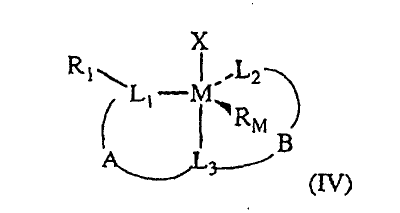 in der R₁, L₁, A, L₃, B und L₂ die in Anspruch 1 genannten Bedeutungen haben und X ein in Bezug auf das Element M koordinativ gebundenes Anion darstellt, mit einer Verbindung der Formel (V)
MX'₃ (V)
in der M die in Anspruch 1 genannte Bedeutung hat und X' ein Halogenatom, einen Alkyl- oder Alkoxyrest darstellt, reagieren lässt, um das entsprechende Produkt 2 zu erhalten.

7. Verwendung der Produkte der Formel 1 oder 2 gemäß einem der Ansprüche 1 bis 4, als (Co)Polymerisationskatalysator.

8. Verwendung nach Anspruch 7 für die (Co)-Polymerisation von Heterocyclen, insbesondere von Epoxiden, wie z.B. Propylenoxid.

9. Verwendung nach Anspruch 7 für die (Co)-Polymerisation von cyclischen Estern, insbesondere polymeren cyclischen Estern der Milch- und/oder Glykolsäure.

10. Verfahren zur Herstellung von Polymeren oder Copolymeren, das darin besteht, dass man ein oder mehrere Monomere, einen Polymerisationskatalysator und ein Polymerisationslösungsmittel bei einer Temperatur zwischen der Raumtemperatur und 150°C während 1 bis 300 h zusammenbringt, **dadurch gekennzeichnet, dass** der Polymerisationskatalysator aus den Produkten der Ansprüche 1 bis 4 ausgewählt ist.

11. Verfahren nach Anspruch 10, **dadurch gekennzeichnet, dass** das Monomer aus Epoxiden, insbesondere Propenoxid, oder cyclischen Estern, insbesondere polymeren cyclischen Estern der Milch- und/oder Glykolsäure, ausgewählt ist.

12. Die Verbindungen der Formel IV gemäß Anspruch 6 in Form von neuen Industrieprodukten.

## Claims

1. The compounds of general formula 1 and 2 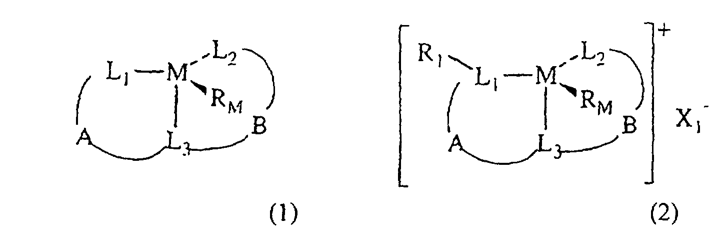 in which
M represents an element of group 13;
R_{M} represents a hydrogen atom, a halogen atom or one of the following substituted or non-substituted radicals: alkyl, cycloalkyl, aryl, alkoxy, cycloalkoxy, aryloxy, alkylthio, cycloalkylthio or arylthio, in which said substituent is a halogen atom, the alkyl, nitro or cyano radical;
A and B represent, independently, a carbonated chain with 2 to 4 carbon atoms, optionally substituted by one of the following substituted or non-substituted radicals: alkyl, cycloalkyl or aryl, in which said substituent is a halogen atom, the alkyl, nitro or cyano radical;
L₁, L₂ and L₃ represent, independently, a group of formula -E₁₅(R15)- in which
E₁₅ is an element of group 15 and
R₁₅ represents the hydrogen atom; one of the following substituted or non-substituted radicals: alkyl, cycloalkyl or aryl, in which said substituent is a halogen atom, the alkyl, nitro or cyano radical; a radical of formula RR'R"E₁₄- in which E₁₄ is an element of group 14 and R, R' and R" represent, independently, the hydrogen atom or one of the following substituted or non-substituted radicals: alkyl, cycloalkyl, aryl, alkoxy, cycloalkoxy, aryloxy, alkylthio, cycloalkylthio or arylthio, in which said substituent is a halogen atom, the alkyl, nitro or cyano radical; or a radical of formula SO₂R'₁₅ in which R'₁₅ represents a halogen atom, an alkyl, haloalkyl or aryl radical optionally substituted by one or more substituents chosen from the alkyl, haloalkyl radicals and halogen;
X₁⁻ represents a non-coordinating anion with respect to element M;
R₁ represents a hydrogen atom, a radical of formula RR'R"E₁₄- in which E₁₄, R, R' and R" have the same definitions as above, or one of the following substituted or non-substituted radicals: alkyl, cycloalkyl or aryl, in which said substituent is a halogen atom, the alkyl, nitro or cyano radical.

2. The compounds of general formula 1 and 2 as defined in claim 1, **characterized in that**
M represents a boron, aluminium or gallium atom;
R_{M} represents the hydrogen atom, a halogen atom and in particular chlorine, or the methyl radical;
A and B represent, independently, a carbonated chain with 2 to 4 carbon atoms, and in particular a carbonated chain with 2 carbon atoms;
L₁ and L₂ represent, independently, a radical of formula -E₁₅(R₁₅)- in which E₁₅ is a nitrogen or phosphorus atom and R₁₅ represents a radical of formula RR'R''E₁₄- in which E₁₄ represents a carbon or silicon atom and R, R' and R" represent, independently, the hydrogen atom or an alkyl radical;
L₃ represents a group of formula -E₁₅(R₁₅)- in which E₁₅ is a nitrogen or phosphorus atom and R₁₅ represents an alkyl radical or a radical of formula RR'R"E₁₄- in which E₁₄ represents a silicon atom and R, R' and R" represent, independently, an alkyl radical; and
R₁ represents a hydrogen atom.

3. The compounds of general formula 1 and 2 as defined in claim 2, **characterized in that**
R_{M} represents the hydrogen atom, the chlorine atom or the methyl radical;
A and B represent, independently, a carbonated chain with 2 carbon atoms;
L₁ and L₂ represent, independently, the isopropylamino radical or Me₃SiN;
L₃ represents the methylamino radical or Me₃SiN; and

4. The compounds of general formula 1 as defined in one of claims 1 to 3 and corresponding to the following formulae:
- [(Me₃SiNCH₂CH₂)₂NSiMe₃]AlCl;
- [(Me₃SiNCH₂CH₂)₂NMe]AlCl;
- [(Me₃SiNCH₂CH₂)₂NMe]AlH;
- [(Me₃SiNCH₂CH₂)₂NMe]AlCH₃;
- [(Me₃SiNCH₂CH₂)₂NSiMe₃]GaCl;
- {[((CH₃)₂CHNCH₂CH₂)((CH₃)₂CHNHCH₂CH₂)NMe]AlCl}{AlCl₄};
- {[(Me₃SiNCH₂CH₂)(Me₃SiNHCH₂CH₂)NSiMe₃]AlCl} {AlCl₄}

5. Process for the preparation of products of general formula 1 and 2 as defined in claim 1, **characterized in that** a product of formula I
(L₁-A-L₃-B-L₂)²⁻, 2Y⁺ I
in which L₁, A, L₃, B and L₂ have the meanings indicated in claim 1 and Y represents an organometallic group, a metal or the hydrogen atom, is reacted with a product of formula II
R_{M}MZ₁Z₂ (II)
in which R_{M} and M have the meanings indicated in claim 1 and Z₁ and Z₂ represent, independently, a parting group, in order to obtain a product of formula 1 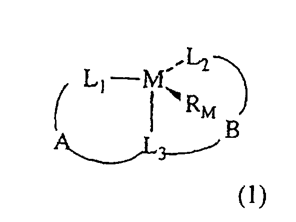 which product of formula (1) can be reacted with a compound of formula (III)
R₁X₁ (III)
in which R₁ and X₁ have the meaning indicated in claim 1, in order to obtain the corresponding product of formula 2.

6. Process for the preparation of products of general formula 2 as defined in claim I, **characterized in that** a product of formula IV 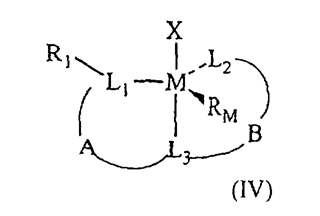 in which R₁, L₁, A, L₃, B and L₂ have the meanings indicated in claim 1 and X represents a co-ordinating anion with respect to element M, is reacted with a compound of formula (V)
MX'₃ (V)
in which M has the meaning indicated in claim 1 and X' represents a halogen atom, an alkyl or alkoxy radical, in order to obtain the corresponding product 2.

7. Use of products of formula 1 or 2 as defined in any one of claims 1 to 4, as a (co)polymerization catalyst.

8. Use according to claim 7 for the (co)polymerization of heterocycles, in particular epoxides such as propylene oxide.

9. Use according to claim 7, for the (co)polymerization of cyclic esters, in particular polymer cyclic esters of lactic and/or glycolic acid.

10. Process for the preparation of polymers or copolymers which consists in introducing one or more monomers, a polymerization catalyst and a polymerization solvent, at a temperature comprised between ambient temperature and 150 °C for 1 to 300 hours, **characterized in that** the polymerization catalyst is chosen from the products of claims 1 to 4.

11. Process according to claim 10. **characterized in that** the monomer is chosen from the epoxides, and in particular propene oxide, or cyclic esters, and in particular the polymer cyclic esters of lactic and/or glycolic acid.

12. As new industrial products, the compounds of formula IV as defined in claim 6.
